# EUROPEAN PATENT APPLICATION

(11) **EP 3 689 441 A1**
(43) Date of publication of application: **05.08.2020**
(21) Application number: 19155084.7
(22) Date of filing: 01.02.2019
(51) Int. Cl.: B01D 53/86

(54) **PROCESS FOR REMOVING NITROGEN OXIDES FROM A GAS**

(71) Applicant: CASALE SA, 6900 Lugano (CH)
(72) Inventor: GARBUJO, Alberto, 22100 Como (IT); BIASI, Pierdomenico, 22100 Como (IT); OSTUNI, Raffaele, 6900 Lugano (IT)
(74) Representative: M. Zardi & Co S.A.

(57) **Abstract**

A process of reducing the content of nitrogen oxides in a gas, comprising passing the gas over a catalyst suitable for selective catalytic reduction of nitrogen oxides and in the presence of a reducing agent, wherein the catalyst is a FER-zeolite catalyst which is not loaded with iron and transition metals.

## Description

### Field of the invention

The present invention relates to removal of nitrogen oxides (NOx) from a gas stream by means of selective catalytic reduction.

### Prior art

Abatement of NOx contained in a gas stream is required for environmental reasons. The symbol NOx and the term "nitrogen oxides" are commonly used to denote mono-nitrogen oxides, namely nitric oxide (NO) and nitrogen dioxide (NO₂). Said nitrogen oxides are known to harm the environment and be potent greenhouse gases. In some cases, removal of nitrous oxide (N₂O) may also be required, possibly in combination with the removal of NOx.

A gas stream containing NOx and possibly N₂O to be removed is originated from combustion processes and from several processes of interest. A noticeable example is the production of nitric acid, wherein a NOx-containing tail gas is produced. Generally, the nitrogen oxides and N₂O must be removed to below a target level in the purified gas, e.g. as required by the applicable law to discharge the gas.

Removal of NOx via selective catalytic reduction (SCR) is based on reduction of the nitrogen oxides to environmentally acceptable compounds, in the presence of a suitable catalyst and possibly in the presence of a reductant. A catalyst which is suitable for SCR is termed "deNOx catalyst". A common reductant is ammonia and selective catalytic reduction with ammonia as reductant is commonly termed "ammonia SCR". Reactions involved in the ammonia SCR process are termed "ammonia SCR reactions".

An SCR process is typically performed by passing the gas through one or more catalytic bed(s) contained in one or more converter(s). Ammonia may be provided e.g. by injecting liquid or gaseous ammonia in the gas stream upstream a converter or directly in the converter. In a multiple-bed process, ammonia may be injected at an intermediate stage, e.g. added to the effluent of a first catalytic bed before it enters the subsequent catalytic bed.

In ammonia SCR, excess ammonia may be required. The term of excess ammonia refers to ammonia being in excess relative to the stoichiometric amount that reacts with the NOx in the ammonia SCR reactions. Feeding excess ammonia is needed to target very low residual emission of NOx e.g. less than 40 ppm, for example 20 ppm. In the presence of excess ammonia, one issue is to avoid ammonia slip, i.e. that unreacted ammonia escapes the process and remains in the purified gas. Ammonia slip poses risks of explosions in downstream operations due to possible formation of ammonium nitrate with residual NOx upon cooling of the gas.

The prior art of catalytic NOx abatement relies mainly on the following options of deNOx catalyst:
V₂O₅ / TiO₂-WO₃ Vanadium deNOx catalyst;
Cu-SSZ13, Cu-ZSM-5 Copper zeolite deNOx catalyst;
Fe-Fer, Fe-ZSM5, Fe-BEA, Fe-Y Iron-loaded zeolite deNOx catalyst;
Pt / Al₂O₃ Platinum supported alumina deNOx catalyst;
Ce / TiO₂ Cerium supported titania deNOx catalyst;
Cu / CeO₂ Copper supported ceria deNOx catalyst.

All the above catalysts are effective for the reduction of NOx in the presence of a suitable reductant such as ammonia. However they also have drawbacks.

Vanadium and copper zeolite deNOx catalysts are ineffective towards N₂O abatement, and even entail significant N₂O byproduct formation when operated in typical ammonia SCR conditions. Hence, they are undesirable in general, and inapplicable when very low emissions levels of both NOx and N₂O are targeted.

In ammonia SCR, the Vanadium deNOx catalyst has a further disadvantage in that it does not catalyse reactions involving ammonia other than SCR. Therefore, it lets any excess ammonia slip from the catalyst bed.

Iron-loaded zeolite deNOx catalyst is considered the current state-of-the-art for NOx and N2O abatement from nitric acid tail gas. For example zeolite may be of the Ferrierite (FER) type or of the FMI type (e.g. ZSM-5 zeolite).

Iron-loaded (also termed iron-laden or iron-exchanged) zeolite denotes a catalyst wherein iron (Fe) is intentionally loaded into the zeolite support through an ion exchange procedure. In this step, expendable elements/ions are replaced by Fe ions in sites of the zeolite support. The result is a homogeneous distribution of Fe throughout the support. The iron exchange process can be performed either on a virgin zeolite powder, i.e. before catalyst shaping, or after the shaping of the virgin zeolite powder (e.g. extrusion in pellets).

According to the current art and literature, iron-loading of the zeolite is considered an essential step to ensure a proper abatement activity of the catalyst, especially towards concurrent NOx and N₂O. It is claimed that the iron is the active material for NOx and N₂O abatement, and the monomer form of iron is active at lower temperatures. The deN₂O and deNOx mechanism proposed in literature over Fe-zeolite are both based on the redox cycle Fe^{III} and Fe^{II} wherein the desorption of adsorbed oxygen acts as the rate determining step. Literature data point out the iron in the zeolite as active species in the relevant reactions.

A drawback of the iron-loaded zeolite catalyst is the high cost. The cost of the catalyst is mainly due to the expensive iron-loading (ion-exchange) process. This process requires a significant amount of a raw material (the precursor of iron to be exchanged); it produces waste water which needs treatment at an additional cost; it requires dedicated equipment items. In addition, the process is very sensitive to parameters and must be carried out under carefully controlled conditions. This increases the manufacturing cost of the catalyst.

A method for reducing the content of NOx and N₂O in gases, in the presence of an iron-loaded zeolite catalyst is disclosed in US 2008/0044331.

### Summary of the invention

The invention aims to provide an efficient and cost-effective SCR process for reducing the content of NOx in a gas.

The aim is reached with a process of reducing the content of nitrogen oxides (NOx) in a source gas, comprising a passage of the source gas over a catalyst suitable for selective catalytic reduction of NOx and in the presence of a reducing agent, wherein the catalyst is a zeolite catalyst and the zeolite of the catalyst is a FER zeolite which is not loaded with iron and is not loaded with any transition metal.

Another aspect of the invention is a catalyst for use in a deNOx process, according to the claims.

Preferred embodiments of the process and of the catalyst are stated in the dependent claims.

The process of the present invention makes use of a ferrierite (FER) zeolite catalyst wherein the FER zeolite is not iron-loaded.

Said FER zeolite catalyst is a catalyst obtainable with a process wherein no iron and no transition metal is loaded into the zeolite. Particularly, no ion exchange procedure to load iron or any transition metal into the zeolite structure is performed during the manufacturing process of the catalyst.

The term of transition metal denotes any element within the period 4, period 5, period 6 of periodic table of elements. In a preferred embodiment the zeolite is not loaded with elements of the period 4 of periodic table and more preferably is not loaded with any of Fe, Cu, V, Ni, Co and Mn.

The FER zeolite may be loaded with at least one alkaline metal. Preferred alkaline metals for this purpose are sodium and potassium. For example, in a preferred embodiment the FER zeolite is subject to an exchange process with Na2O and K2O. The FER zeolite used in the present invention, accordingly, does not contain ion-exchanged iron. Although not loaded with iron, the FER zeolite of a catalyst according to the invention may contain small amounts of iron, although in a different form than ion-exchanged iron which is found in the iron-loaded zeolites. Particularly, the catalyst of the present invention may contain impurities of iron which have typically the form of agglomerates of iron; in contrast the ion-exchanged iron is in the form of atoms of iron bonded to the zeolite.

The content of iron in a catalyst according to the invention may also be smaller compared to the iron content of most iron-loaded zeolites.

In a catalyst according to the invention, iron may be found for example as Fe₂O₃. In a catalyst according to the invention, iron (e.g. Fe₂O₃) may be heterogeneously dispersed contrary to the homogeneous dispersion found in iron-loaded zeolites, due to the lack of a proper Fe-exchange step during the manufacturing process. Iron may also be detected as minor impurity in the zeolite structure. Traces of transition metals may also be present.

The invention is based on the very unexpected finding that a FER zeolite catalyst without iron loading exhibits a deNOx activity which is comparable (or even superior) to that of the much more expensive iron-loaded zeolite catalysts. This finding is contrary to the current belief that iron loading is responsible for de-NOx activity of the zeolite catalysts. The applicant has found that a catalyst according to the invention tends to be less active for N₂O abatement, compared to an iron-loaded zeolite catalyst. This reduced activity for N₂O abatement is however overcompensated by the advantage of a comparable activity towards NOx abatement at a much less cost. The deN₂O performance can be matched to iron-loaded zeolite by minor adjustment of operating parameters to reach same near complete abatement levels. No ammonia slip was detected. The catalyst of the invention is available at a competitive cost due to the absence of loading with iron or transition metals in the manufacturing process.

The catalyst of the invention preferably includes an inorganic binder material. Preferred inorganic binders include Al₂O₃, SiO₂, ZrO₂, CeO₂. A preferred concentration of binder is 10% to 30%wt. A preferred type of FER zeolite has a Si/AI ratio greater than 6. Said ratio is more preferably in the range 8 to 9, most preferably it is 8.8 or around 8.8. These preferred embodiments show the best compromise between mechanical stability and chemical activity

The invention is applicable to a process for removing NOx and to a process for removing NOx and N₂O (e.g. concurrent NOx reduction and N₂O decomposition). The source gas may be a flue gas, e.g. a gas produced by a combustion process, or another process gas which needs NOx and possibly N₂O abatement before a further use or before discharge into atmosphere. An interesting application of the invention relates to treatment of a tail gas in a nitric acid production process.

A process according to the invention may be performed under temperature, pressure, space velocity and composition similar to those of a process using iron-loaded FER zeolite catalyst. The invention allows reaching a target concentration of NOx and N₂O as low as 50 ppm.

The invention is also applicable to a revamping procedure, e.g. revamping of a nitric acid plant. Revamping a nitric acid plant may be required to meet a target concentration of NOx and N₂O in the tail gas discharged to the atmosphere.

### Description of preferred embodiments

A process of reducing the content of nitrogen oxides (NOx) in a source gas, according to the invention, may be carried out in a deNOx stage including a catalytic bed or a plurality of catalytic beds. The catalytic bed or beds may be contained in one pressure vessel or in a plurality of pressure vessels. In a multi-bed embodiment, two or more beds may be contained in the same pressure vessel or each catalytic bed may have a separate vessel, according to various embodiments. Any catalytic bed used in the invention may have any of axial flow, radial flow, mixed axial-radial flow.

A process according to the invention is carried out in the presence of a reducing agent. Preferably, said reducing agent is a nitrogen-containing reducing agent. Particularly preferably, said reducing agent is or includes ammonia. The reducing agent is preferably gaseous. Ammonia may be in excess over the stoichiometric amount for reduction of NOx.

A process according to the invention may include a step of adding an ammonia-containing reducing agent. Preferably, the molar ratio of ammonia contained in the added reducing agent over NOx contained in the source gas is 0.5 to 2.5, preferably 0.8 to 2 and more preferably 0.9 to 1.5.

For example, a process according to an embodiment may include the step of providing at least one stream of an ammonia-containing reducing agent, which is brought into contact with the source gas. An ammonia-containing reducing agent may be mixed with the source gas before admission into a catalytic bed. In a multiple-bed embodiment, the reducing agent may be added at an intermediate step, e.g. added to the effluent of a first catalytic bed before admission into the next catalytic bed.

A process according to the invention may include setting a proper space velocity in the one or more catalytic bed(s) where the process is performed. A preferred space velocity through a catalytic bed containing a catalyst according to the invention is 5 000 to 5 0000 (5 to 50 · 10³) h⁻¹, preferably 7 000 to 25 000 (7 to 25 · 10³) h⁻¹ on the basis of the relevant gas flow rate and volume of catalyst.

The temperature of the process is preferably greater than 300°C. The pressure may be generally in the range 1 to 50 bar.

A process according to the invention may include also a step of reducing the content of N₂O in the source gas. A step of removing N₂O may be performed before or after a removal of NOx. A removal of N₂O may also be performed concurrently with a removal of NOx in the same catalytic bed. Particularly, an embodiment includes a concurrent removal of NOx and N₂O by passing the NOx- and N₂O-containing gas over a catalyst which is not loaded with iron and transition metals. This can be made in one or more catalyst bed(s) containing the described catalyst.

The process of removing NOx and possibly N₂O, in the various embodiments of the invention, may be carried out in one or more catalyst beds which contain exclusively the catalyst of the invention, wherein the FER zeolite catalyst is obtained without iron loading and transition metals loading.

Removal of N₂O may also be performed in the presence of a N2O decomposition catalyst. Said N₂O decomposition catalyst may be the same catalyst used for deNOx process or different. Said N₂O decomposition catalyst may be a conventional iron-loaded zeolite catalyst or a FER zeolite catalyst according to the invention which is not loaded with iron and transition metals. Decomposition of N₂O is known to occur in the presence of an iron zeolite catalyst. A possible explanation of the N₂O decomposition is given in the above mentioned prior art US 2008/0044331, starting from [0030]. As stated above, the applicant has noted that also a catalyst according to the invention has a significant deN₂O activity.

When N₂O is also removed, at least 10% of N₂O initially contained in the source gas is preferably removed, more preferably at least 30% and even more preferably at least 50%.

An embodiment of a process for removing NOx and N₂O as well includes a deN₂O stage followed by a deNOx stage with intermediate addition of ammonia-containing reducing agent. To this purpose, one or more deN₂O catalytic beds (deN₂O stage) are arranged upstream one or more de-NOx catalytic beds (deNOx stage). An advantage of this embodiment (deN₂O-first setup) is a saving of N₂O decomposition catalyst because further N₂O abatement occurs in the deNOx stage, up to the target N₂O abatement level.

In a deN₂O-first setup, a preferred feature is that removal of N₂O in the deN₂O stage is not greater than 90%, preferably not greater than 80%. An advantage is that a residual content of N₂O helps destroying the NOx in the subsequent deNOx stage.

Another embodiment includes a deN₂O stage downstream of a deNOx stage (deNOx-first setup). A deNOx bed in lead position is advantageous particularly when a deNOx catalytic bed and a deN2O catalytic bed are contained in the same pressure vessel (dual bed reactor). In that case, the mixing of reducing agent and process gas can be performed outside the pressure vessel; the dual bed reactor has a smaller volume and the construction of the reactor is simpler.

A process which includes the removal of N₂O may also include the addition of a reducing agent for N₂O. Said reducing agent for N₂O may include a hydrocarbon, carbon monoxide (CO), hydrogen (H₂) or a mixture thereof.

A particularly preferred application of the invention concerns the treatment of a tail gas in a nitric acid production process.

The industrial process for the synthesis of nitric acid involves the catalytic oxidation of ammonia to produce a gas containing N₂O and nitrogen oxides. Said oxidation of ammonia is typically performed over platinum-rhodium (Pt-Rh) catalytic gauzes. The so obtained gas is subjected to a subsequent step of absorption wherein the gas is contacted with water to absorb NO₂ in water and produce nitric acid, whilst N₂O is not absorbed. The absorption step is performed in an absorber, which is typically an absorber column. The absorption step delivers a liquid product stream containing nitric acid, and a gas containing N₂O and residual NOx, which is termed tail gas. Said tail gas is at pressure above atmospheric and may be work-expanded in a suitable expander for energy recovery before being discharged into the atmosphere. Abatement of NOx and N₂O from the tail gas may be required to meet the applicable environmental requirements.

The abatement of N₂O and NOx upstream of the tail gas expander is termed tertiary abatement. N₂O does not play a role in the formation of nitric acid and, therefore, may also be removed in the previous process steps. Removal of N₂O from the gas after the oxidation of ammonia and before the absorption stage is referred to as secondary abatement, whilst measures aimed to avoid N₂O formation during the oxidation of ammonia are called primary abatement. Abatement of N₂O and/or NOx performed after the expansion (i.e. downstream of the expander) is termed quaternary abatement.

A process of removing NOx according to the present invention can be carried out downstream of an absorber in a tertiary or quaternary position, namely upstream or downstream of a tail gas expander respectively. A tertiary abatement is preferred because it enables use of pellet catalysts rather than monolith.

The deNOx catalyst of the present invention can be produced, for example, by any of the following: co-extrusion with additives and/or binder(s), or 3D printing of raw materials, or co-precipitation of binders and zeolite.

The catalyst can be shaped in different forms, depending on the application (e.g. tertiary vs quaternary abatement in a nitric acid process), which may also affect the catalytic performance (activity).

The catalyst may be in pellet form or monolith or foams. A preferred shape of the catalyst is a cylindrical or multilobe extrudate; a particularly preferred shape is a trilobe. Trilobe is preferred because it is more active due to the lower diffusion limitation than monolobe. Moreover the applicant has found out that the trilobe is a particularly preferred compromise between activity and mechanical resistance. The size of the extrudate is preferably about 2mm outer diameter x 10mm length.

A process for making the catalyst of the present invention may include the steps of: i) providing the raw materials, e.g. Al, Si and Na precursors; ii) mixing and hydrothermal treatment to obtain a powder; iii) mixing with binder and additives; iv) extrusion to the final shape, e.g. pellets. The process does not include any step of loading the zeolite with iron, such as ion exchange.

A FER zeolite according to a preferred embodiment is exchanged with 0.1 %wt of Na₂O and 0.6 %wt of K₂O. A final content of about 0.1 %wt of Na and about 0.5 %wt of K was observed in the zeolite after the ion-exchange process.

The following is an exemplary composition of a FER zeolite catalyst, not iron-loaded, according to the present invention.

| | %wt |
|---|---|
| Fe | 0.06 |
| K | 0.42 |
| Na | 0.35 |
| Mg | <0.05 |
| Si | 21.6 |
| Al | 3.9 |

### Example

The following table 1 compares a process for concurrent NOx and N₂O abatement with a catalyst according to the invention having the above exemplary composition and a prior-art process for concurrent NOx and N₂O abatement with a conventional iron-loaded FER zeolite catalyst (iron ferrierite catalyst).The conventional catalyst was a Fe-FER catalyst containing Fe 0.54%; K 0.13%; Na 0.26%; Mg<0.05%; Si 22.7%; Al 3.8% (%wt).

The test was performed in a lab-scale test plant with a single catalytic bed. Ammonia was fed as reductant with NH₃/NOx ratio of approximately 1.1 (i.e. 10% excess of ammonia). Feed conditions were typical of nitric acid plant with upstream N₂O abatement, e.g. a tertiary N₂O abatement step, or secondary N₂O abatement step. Process conditions were optimized for NOx reduction and concurrent N₂O abatement. In the table, the symbol ppm denotes parts per million in volume; the symbol GHSV denotes gas hourly space velocity in the test catalyst bed.

**Table 1**

| | Catalyst bed inlet | Catalyst bed outlet | *Abatement* | Catalyst bed outlet | *Abatement* |
|---|---|---|---|---|---|
| | Same for invention and prior art | Invention | *Invention* | Prior art | *Prior art* |
| P (bar) | | 10 | | 10 | |
| T (°C) | | 430 | | 430 | |
| Molar composition | | | | | |
| NOx (ppm) | 402 (NO/NO2=2.3) | 29 | **93%** | 39 | ***90%*** |
| N₂O (ppm) | 302 | 103 | **66%** | 24 | **92%** |
| NH₃ (ppm) | 442 | 0 | ***100%*** | 0 | ***100%*** |
| O₂ (%mol) | 3% | 3% | | 3% | |
| H₂O (%mol) | 0.4% | 0.4% | | 0.4% | |
| N₂ | Balance | Balance | | Balance | |
| GHSV (h⁻¹) | 14 000 | | | | |

The example shows: a higher NOx abatement for invention than prior art, 93 vs 90%. N₂O abatement of the inventive process was lower than prior art, 66 vs 92%. No ammonia slip for the inventive process despite 10% excess in feed as in prior art.

## Claims

1. A process of reducing the content of nitrogen oxides (NOx) in a source gas, comprising passing the gas over a catalyst suitable for selective catalytic reduction of NOx and in the presence of a reducing agent, wherein the catalyst is a zeolite catalyst and the zeolite of the catalyst is a FER zeolite which is not loaded with iron and is not loaded with any transition metal.

2. A process according to claim 1, wherein said zeolite catalyst includes a binder material.

3. A process according to claim 2, wherein the binder material includes one or more of: Al₂O₃, SiO₂, ZrO₂, CeO₂.

4. A process according to claim 2 or 3, wherein the binder material is in a concentration of 10% to 30% by weight.

5. A process according to any of the previous claims, wherein the FER zeolite is loaded with at least one alkaline metal..

6. A process according to any of the previous claims, wherein the FER zeolite has a Si/AI ratio greater than 6, preferably in the range 8 to 9, most preferably 8.8 or around 8.8.

7. A process according to any of the previous claims, wherein said reducing agent is or includes ammonia.

8. A process according to claim 7, including the step of providing an ammonia-containing reducing agent, wherein the molar ratio of ammonia contained in the added reducing agent over NOx contained in the source gas is 0.5 to 2.5, preferably 0.8 to 2 and more preferably 0.9 to 1.5.

9. A process according to any of the previous claims, including a passage of NOx-containing gas in a catalytic bed containing said zeolite catalyst, wherein the space velocity in said catalytic bed is 5 000 to 50 000 h⁻¹, preferably 7 000 to 25 000 h⁻¹.

10. A process according to any of the previous claims, wherein the content of NOx in the source gas is reduced by at least 50%.

11. A process according to any of the previous claims, further comprising a step of reducing the content of N₂O in the source gas.

12. A process according to claim 11, comprising passing the gas over a N₂O decomposition catalyst in at least one deN₂O stage which is before or after a deNOx stage, and/or comprising a removal of N₂O concurrent with the removal of NOx.

13. A process according to claim 12, wherein the concurrent removal of N₂O and NOx is performed in at least one catalyst bed containing the catalyst which is not loaded with iron and transition metals.

14. A process according to claim 12 wherein said N₂O decomposition catalyst of the deN₂O stage is iron-loaded zeolite catalyst or a FER zeolite catalyst which is not loaded with iron and not loaded with any transition metal.

15. A process according to any of claims 12 to 14 wherein at least 10% of N₂O initially contained in the source gas is removed, preferably at least 30% and more preferably at least 50%.

16. A process according to any of the previous claims, wherein the source gas is a tail gas of a process for the synthesis of nitric acid.

17. A catalyst for use as deNOx catalyst in a process of selective catalytic reduction of NOx, the catalyst being a zeolite catalyst wherein the zeolite is a FER zeolite which is not loaded with iron.

18. A catalyst according to claim 17 including a binder material which includes preferably one or more of Al₂O₃, SiO₂, ZrO₂, CEO₂, the binder material being more preferably in an amount of 10% to 30% by weight.

19. A catalyst according to claim 17 or 18, wherein the FER zeolite has a Si/AI ratio greater than 6, preferably in the range 8 to 9, most preferably 8.8 or around 8.8.
